# FASCICULE DE BREVET EUROPEEN

(11) **EP 1 386 839 B1**
(45) Date de publication et mention de la délivrance du brevet: **27.06.2007**
(21) Numéro de dépôt: 03291460.8
(22) Date de dépôt: 17.06.2003
(51) Int. Cl.: B65B 9/04, B65B 47/02, B29C 51/26

(54) **Procédé et machine de formage intégré pour la fabrication de pots non-démoulables**
Verfahren und Maschine für integrierte Formung zum Herstellen von nichtentformbaren Bechern
Integrated forming method and machine for manufacturing non-demouldable cups

(30) Priorité: 02.08.2002 FR 0209873
(43) Date de publication de la demande: 04.02.2004
(73) Titulaire: A.R.C.I.L., 78400 Chatou (FR)
(72) Inventeur: Becquart, Patrick, 92300 Levallois-Perret (FR); Cossais, Dominique, 94230 Cachan (FR)
(74) Mandataire: Schwartz, Thierry J.

(56) Documents cités:
- DE-A- 19 627 675
- FR-A- 2 644 425
- US-A- 4 261 949
- US-A- 6 094 890

## Description

L'invention concerne un procédé de fabrication de pots non démoulables par formage intégré sans perte notable de matériau, ainsi que la machine de mise en oeuvre d'un tel procédé.

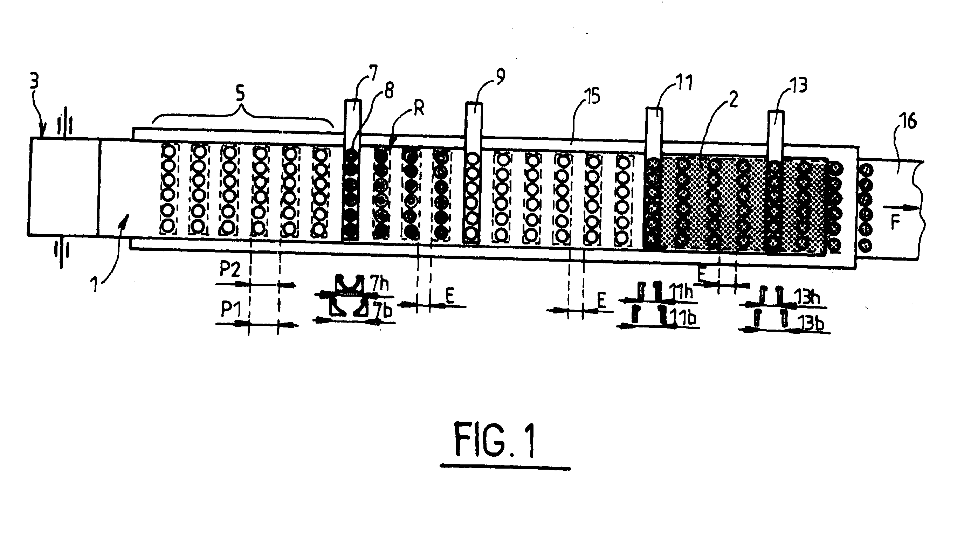

Pour fabriquer des pots, en particulier des pots de produits alimentaires ou autres, une technique traditionnelle, illustrée en figure 1, utilise le formage intégré. Il consiste à prévoir le traitement, par exemple d'une feuille plastique thermoformable 1, par cycle, par poste et par groupe de pots. La feuille, enroulée autour d'une bobine 3, est déroulée longitudinalement selon une bande continue et traitée successivement en différents postes, équipés respectivement : de moyens de chauffage de la feuille 5, de moules de formage 7 des pots 8, de moyens de dosage 9 du contenu des pots, d'outillages de soudure 11 de la feuille d'opercule 2 et de découpe finale 13 par pot unitaire ou par pack de pots.

Le traitement est continu en déplacement longitudinal grâce à un dispositif d'avance 15. Un convoyeur de réception 16 est disposé en sortie. Les moyens d'avance permettent de passer, à chaque fin de cycle machine, d'une ou plusieurs rangées transversales R de pots par pas à une autre, en avançant d'une longueur de déroulement de la bobine correspondant à un pas dit pas machine P1.

Le pas machine P1 coïncide dans ce cas avec le pas de la feuille plastique P2, dit pas matériau, qui correspond à la largeur de la zone de la feuille plastique dans le sens de l'avance, nécessaire aux traitements des différentes opérations aux différents postes.

Cependant les pots peuvent présenter des formes de plus en plus variées, avec en particulier des contre-dépouilles importantes. Il s'en suit qu'ils ne sont pas démoulables sans ouverture des moules au droit du poste de formage et, éventuellement, qu'ils ne sont pas dégageables au droit d'autres postes d'outillage (soudure ou découpe), notamment chaque fois qu'un "col" du pot en partie supérieure est de dimension inférieure à celle du "ventre" du pot.

Ainsi, en fin de traitement, les moules ou, éventuellement, les contre - électrodes de soudure ou les matrices, en conformation fermée en position de travail (pour le formage, la soudure ou la découpe finale) avec un encombrement 7h, sont ouverts longitudinalement en passant en position de transfert d'un poste à l'autre avec un encombrement 7b; de même, les outillages de soudure et de découpage, en conformation fermée en position de travail, avec un encombrement respectif 11h et 13h, sont ouverts en position de transfert avec un encombrement longitudinal 11b et 13b. Afin d'éviter les interférences entre les outillages, ou entre les outillages et les empreintes formées, un espace longitudinal E suffisant doit être prévu entre les rangées R de pots.

Les pas machine P1 et plastique P2 étant directement fonction de l'espace E, il en résulte une perte importante de matériau thermoformable et de matériau d'opercule entre les rangées de pots, du fait que la partie des feuilles correspondant aux espaces E, ne sera pas utilisée pour faire des pots.

Pour remédier à ce gaspillage, il a été proposé d'utiliser deux machines, une première machine pour former et découper les pots, puis une seconde machine de remplissage. Cette technique présente au moins deux inconvénients majeurs :
- les modes de prise en charge n'étant pas continus entre les deux machines, - des pots individuels succédant à une bande de matériau continu -, une rupture de prise en charge se produit nécessairement même si les machines sont intégrées ;
- un système à opercules prédécoupés est peu économique : le pré-découpage nécessite des matériaux d'opercule plus coûteux et une logistique complexe et coûteuse, avec la mise en oeuvre de moyens de stockage et de déstockage dans des magasins d'alimentation dédiés, faisant intervenir des dispositifs automatiques complexes et délicats, ou une main d'oeuvre continue et astreignante.

Une autre solution consiste à étirer périodiquement la feuille de sorte que l'espace E obtenu a une épaisseur de matière sensiblement plus faible, ce qui limite, d'autant, la quantité de matière thermoformable perdue. Ce procédé est délicat à mettre en oeuvre. De plus, il ne réduit pas les pertes en matériau d'opercule lorsqu'il se présente, traditionnellement, en rouleaux longitudinaux, ou augmente sensiblement les coûts, en matériau d'opercule et en logistique, lorsqu'il se présente sous forme d'opercules prédécoupés.

La présente invention vise à supprimer totalement les pertes de matière de formage et/ou d'operculage entre deux rangées, ou une très grande partie de ces pertes, tout en conservant les avantages du thermoformage intégré. Pour ce faire, il est procédé à une coupe de la feuille en tronçons et à un positionnement approprié de ces tronçons par rapport aux outillages successifs.

Plus précisément, l'invention a pour objet un procédé de fabrication de pots non démoulables par formage intégré comportant des outillages de traitement successifs d'au moins une feuille de matériau d'emballage, ces outillages présentant une ouverture de conformation variable en fonctionnement, le procédé consistant à prévoir une coupe préliminaire de la feuille d'emballage en tronçons selon une géométrie appropriée aux outillages de traitement, chaque tronçon du matériau étant coupé selon un pas matériau réglé pour être égal à très peu supérieur à la largeur de matériau nécessaire au traitement de formage ou d'operculage sans tenir compte de l'ouverture des outillages, puis à positionner successivement les tronçons pour les faire avancer de manière espacée selon un pas machine, le pas machine étant égal à très peu supérieur à la largeur d'outillage la plus importante en position ouverte de transfert.

L'expression « très peu supérieur » est introduite pour justifier des tolérances à prévoir afin d'être assuré de disposer de suffisamment de matériau pour réaliser l'emballage, et de suffisamment de jeu pour le fonctionnement des outillages.

Le formage peut être réalisé à chaud, à partir de matériau de thermoformage, ou à froid.

L'invention s'applique aussi bien au formage qu'à l'operculage intégré des pots par découpe de la feuille de formage et/ou d'operculage selon une géométrie semblable. Le gain de matière correspond, dans les deux cas, sensiblement à l'espace de matière entre deux rangées de pots de l'art antérieur, puisque la matière étant quasi totalement utilisée selon la présente invention y compris, éventuellement, en deçà des "ventres" si la dimension de la "collerette" des pots le permet.

Dans ces conditions, les avantages du formage intégré sont conservés, avec notamment un processus permettant la prise en charge continue d'une ou plusieurs rangées de pots par cycle sur chacun des postes de la machine, tout en supprimant toutes les pertes, ou au moins une grande partie des pertes, des matériaux de formage et d'opercule.

L'invention concerne également une machine de mise en oeuvre du procédé. Cette machine comporte des moyens de coupe en tronçons d'au moins une feuille de matériau de formage et/ou d'operculage alimentée(s) à partir d'au moins une bobine, chaque tronçon ayant une largeur selon une direction de traitement égale à un pas matériau, des moyens de dépose régulière de chaque tronçon à une distance constante définissant un espace entre les tronçons et des moyens de transport de ces tronçons à différents postes de traitement, à raison d'autant de tronçons que de rangées de pots à fabriquer par pas machine, ces postes comportant, successivement selon une direction de traitement, au moins des outillages de formage, de dosage, de soudure et de découpe finale des pots, ces outillages pouvant passer d'une conformation fermée à ouverte en position de travail ou de transfert d'un poste à l'autre, le pas matériau étant réglé pour être égal à très peu supérieur à la largeur de matériau nécessaire au formage ou à l'operculage sans tenir compte de l'ouverture des outillages, et le pas machine étant égal à très peu supérieur à la largeur d'outillage la plus importante en conformation ouverte.

Selon des modes particuliers de réalisation :
- le matériau d'emballage est le matériau de formage des pots et/ou le matériau d'opercule, selon une géométrie semblable à celle ajustée au formage, afin de supprimer les pertes du matériau de formage et/ou d'opercule entre deux rangées de pots à traiter ;
- chaque pas machine traite, selon les besoins, de 1 à plusieurs rangées de pots à fabriquer à la fois, par exemple 2, 3, 4 ou plus, permettant la prise en charge continue d'une ou plusieurs rangées de pots par cycle sur chacun des postes de la machine ;
- les moyens de transport des tronçons de matériau de formage sont avantageusement constitués par une chaîne à picots ;
- les moyens de coupe des tronçons sont constitués par une matrice support de la feuille associée à au moins une lame ou une molette entraînée par des moyens de déplacement perpendiculairement à la feuille de formage ;
- le picotage des tronçons de feuille est réalisé par des moyens presseurs qui sont soit combinés aux moyens de coupe, dans ce cas les moyens de coupe ont un gabarit limité par la présence des moyens de transport pour ne pas interférer avec ces moyens de transport, soit séparés de ces moyens, la course des moyens de coupe étant alors limitée aux nécessités de la coupe ;
- des moyens de pré-découpe de la feuille de formage sont avantageusement prévus en combinaison avec les moyens de coupe dans le cas d'un gabarit limité, pour former des pré-découpes d'extrémité dans la feuille au pas précédent le pas de coupe, les moyens de pré-découpe agissant sur toute l'épaisseur de la feuille afin d'obtenir une découpe complète de la feuille au pas de coupe ;
- lorsque le pas machine traite deux rangées de pots, il peut être prévu une seule bobine d'alimentation en feuille de formage et un seul moyen de coupe, le moyen de coupe avance d'un demi-pas machine après découpe du premier tronçon de chaque pas et la bobine avance d'un pas plastique augmenté d'un demi-pas machine pendant l'arrêt de la chaîne, puis l'outil de coupe recule d'un demi-pas machine et la bobine recule de l'espace entre tronçons, pendant l'avance de la chaîne, en temps masqué ;
- alternativement, dans ce même cas de traitement deux rangées de pots avec une seule bobine d'alimentation en feuille de formage et un seul moyen de coupe, le moyen de coupe recule d'un demi-pas machine après découpe du premier tronçon de chaque pas et la bobine recule d'un espace entre tronçons, pendant l'arrêt de la chaîne, puis l'outil de coupe avance d'un demi-pas machine et la bobine avance d'un pas plastique augmenté d'un demi-pas machine, pendant l'avance de la chaîne, en temps masqué ;
- lorsque le pas de cycle correspond à n rangées de pots, il peut être prévu une seule bobine d'alimentation et un seul moyen de coupe fonctionnant comme précédemment, ou bien autant de moyens d'alimentation en feuilles de formage et de moyens de coupe de ces feuilles en tronçons, décalés de la valeur P1/n;
- le matériau d'opercule est alimenté en bande à partir d'une bobine, puis découpé en tronçons de dimensions semblables à celles des tronçons du matériau de formage; outre l'aspect économique, une telle alimentation présente l'avantage, par rapport à l'alimentation classique en morceaux prédécoupés et alimentés à partir d'un magasin de stockage, de permettre une stérilisation avant ou après tronçonnage par rayonnement (ultraviolet, de type flash, infrarouge, etc.), ou par traitement chimique continu, alors qu'il est très difficile de stériliser juste avant soudure des opercules unitaires de l'état de la technique ;
- des moyens de pré-découpe du matériau d'opercule semblables aux moyens de pré-découpe de la feuille de formage forment des tronçons de matériau d'opercule qui sont pré-soudées par points sur les tronçons de matériau déformable, pour entraîner les tronçons de matériau d'opercule jusqu'au poste de soudure et réaliser l'operculage des pots ;
- alternativement, des moyens de découpe fendent préalablement la feuille d'operculage en autant de banderoles que de rangées de pots à traiter simultanément, puis des moyens de vrillage et d'avancée latérale amènent les banderoles dans des glissières de positionnement pour que des moyens de découpe tranches les banderoles en tronçons sur chaque tronçon de feuille déformable ; cette solution convient en particulier lorsque le pas machine traite au moins 2 rangées de pots par pas ;
- le formage peut être réalisé à chaud, à partir de matériau thermoformable, ou à froid, par déformation d'une feuille de métal, par exemple par poinçonnage d'une feuille d'aluminium.

D'autres avantages et caractéristiques de la présente invention apparaîtront à la lecture de la description qui suit, relative à des exemples de réalisation non limitatifs, en référence aux figures annexées qui représentent, respectivement :
- la figure 1, une vue schématique supérieure d'une machine de thermoformage intégré pour pots non démoulables, selon l'état de la technique (commentée ci-dessus) ;
- les figures 2a à 2g, des vues de face, d'exemples non exclusifs, de pots non démoulables ;
- la figure 3, une vue schématique supérieure et partiellement de côté d'une machine de thermoformage intégré selon l'invention, avec une rangée de pots traitée par cycle;
- la figure 4, une vue schématique supérieure et partiellement de côté de la machine selon la figure précédente, adaptée au traitement de deux rangées de pots par cycle ;
- les figures 5a à 5e, en vues schématiques supérieures et de côté, le fonctionnement des moyens de coupe de feuille thermodéformable d'une machine selon l'invention, dans le cas d'une seule bobine et d'une seule rangée par cycle ;
- les figures 6a, 6b et 6c, en vue schématique de face, trois phases de picotage de la feuille thermoformable;
- les figures 7a à 7e, en vues schématiques supérieures et de côté, cinq phases de fonctionnement des moyens de coupe de feuilles thermoformables à deux bobines d'alimentation, pour une machine adaptée au dépôt et traitement de deux tronçons par pas machine ;
- les figures 8a à 8f, en vues schématiques supérieures et de côté, six phases de fonctionnement des moyens de coupe de feuille thermoformable à bobine d'alimentation unique, pour une machine selon l'invention adaptée au dépôt de deux tronçons par pas machine ;
- les figures 9a à 9e, en vues schématiques supérieures et de côté, cinq phases de réalisation des opérations de découpe et de dépose du matériau d'opercule, dans le cas d'une bobine unique pour la soudure d'un tronçon d'opercule par pas machine ;
- les figures 10a à 10c, en vues supérieures, de côté et rabattue, trois phases des opérations de découpe et de dépose du matériau d'opercule selon une variante de réalisation, dans le cas d'une bobine unique pour la soudure de deux tronçons d'opercule par pas machine ;
- les figures 11a à 11c, des vues schématiques supérieures de découpe finale de la machine selon la figure précédente, adaptée respectivement à la découpe unitaire de pot, à la découpe de packs de 2 et de 3 pots ; et
- les figures 12a et 12b, des vues en plan schématique pour illustrer le gain de matière obtenu avec le procédé selon l'invention par rapport à la technique antérieure.

Les signes de référence identiques désignent, sur les figures, des éléments identiques ou correspondants.

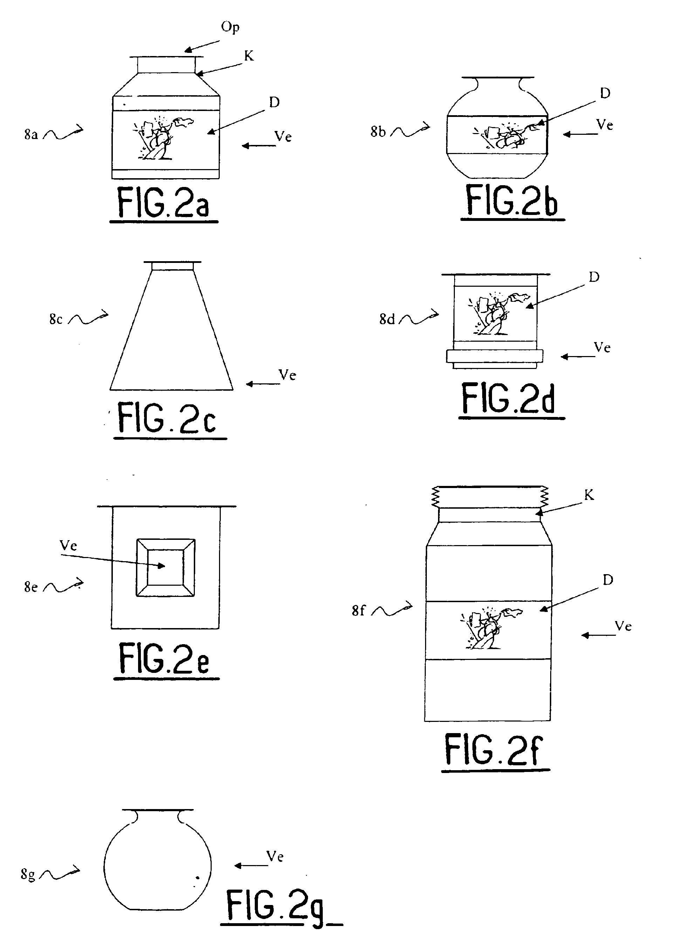

En référence aux figures 2a à 2g, les pots non démoulables, respectivement 8a à 8f, peuvent présenter des formes variées et complexes, et peuvent être recouverts d'un décor D : cylindrique à diamètre variable (figure 2d) ou à col K troncocylindrique (figure 2a) avec parties à vis (figure 2f), cubique avec éventuellement une partie centrale en creux (figure 2e), ou bien encore sphérique avec un décor D (figure 2b), sphérique sans décor (figure 2g) ou conique (figure 2c), ou tout autre forme moulable. Les pots sont fermés par un opercule Oₚ soudé sur la collerette C. On voit ainsi que l'on peut réaliser des pas de vis, et que l'on peut également déposer des décors latéraux, le procédé selon l'invention étant compatible avec les dispositifs de décoration par banderole introduits dans le moule avant formage.

Les contre - dépouilles importantes liées à la plupart de ces formes, en particulier chaque fois qu'un col K du pot est de dimension inférieure à celle du « ventre » Vₑ du pot ne les rendent pas démoulables au droit du poste de formage et, éventuellement, non dégageables au droit d'autres postes d'outillage (soudure ou découpe).

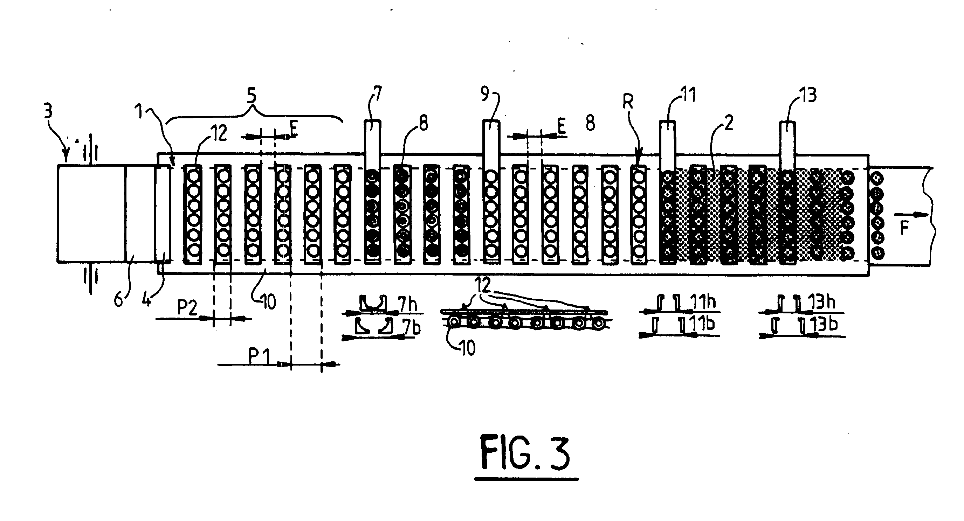

Pour fabriquer ces pots selon l'invention, comme illustré en figure 3, une feuille thermoformable 1 est débitée à partir d'une bobine 3 puis découpée en tronçons 4 par des moyens de coupe 6. Les tronçons sont entraînés par une chaîne de transport 10 à picots 12, puis traitée en des postes successifs par les différents outils du thermoformage intégré : les boîtes de chauffe 5 de la feuille et les moules de thermoformage 7 des pots 8 (avec moules, contre-moules et poinçons), le doseur 9 du contenu des pots, le poste d'operculage équipé d'électrodes de soudure 11 de la feuille d'opercule 2, et le poste de découpe final muni d'outils de découpe 13 des pots par unité ou pack. Le traitement est à cadence continue et permet de passer, à chaque fin de cycle de traitement, d'une rangée de pots 8 à une autre. Dans ce premier exemple, les outils de thermoformage intégré traitent les pots à raison d'une rangée R par cycle et de 6 pots par rangée.

Conformément à l'invention, cette machine comporte en particulier les moyens de coupe 6 de la feuille 1 en tronçons rectangulaires 4, en amont des postes de traitement. La forme en rectangle peut être avantageusement remplacée par d'autres formes, par exemple: parallélogramme, trapèze, etc., pour s'adapter à des cas particuliers. Dans le cas d'un traitement de la machine par rangée unique de pots par cycle, le pas plastique P2 est égal à P1 - E. La matière plastique correspondant à l'espace E dans le cadre du procédé classique illustré en figure 1, est ainsi économisée.

A chaque cycle, un traitement est effectué à chacun des postes par les moules 7 et les outils de soudure 11 et de découpe finale 13 concernés pour passer de la conformation de travail, avec un encombrement minimal 7h, 11 h et 13h, à la conformation ouverte en position de transfert d'un poste à l'autre, avec un encombrement maximal respectif 7b, 11b et 13b.

Le pas P1 du cycle de fonctionnement de la machine et des moyens de coupe 6 est à peine supérieur à celui des ouvertures des moyens de traitement qui présente, en position de transfert, le plus grand encombrement longitudinal selon la direction générale F de la machine de transport, ci-après ouverture maximale. Dans cet exemple, la largeur P2 de chaque tronçon de matériau thermoformable est de 60 mm, correspondant sensiblement à la plus grande largeur des outillages en position fermée de travail, et le pas machine P1 est réglé à peine supérieur à l'ouverture maximale des outils de traitement (celui du démoulage des pots dans l'exemple), qui est de 100 mm, correspondant à la largeur maximale des outillages en position de travail (60 mm) augmentée des deux demi-ouvertures (deux fois 20 mm) des demi - outillages de l'ouverture maximale.

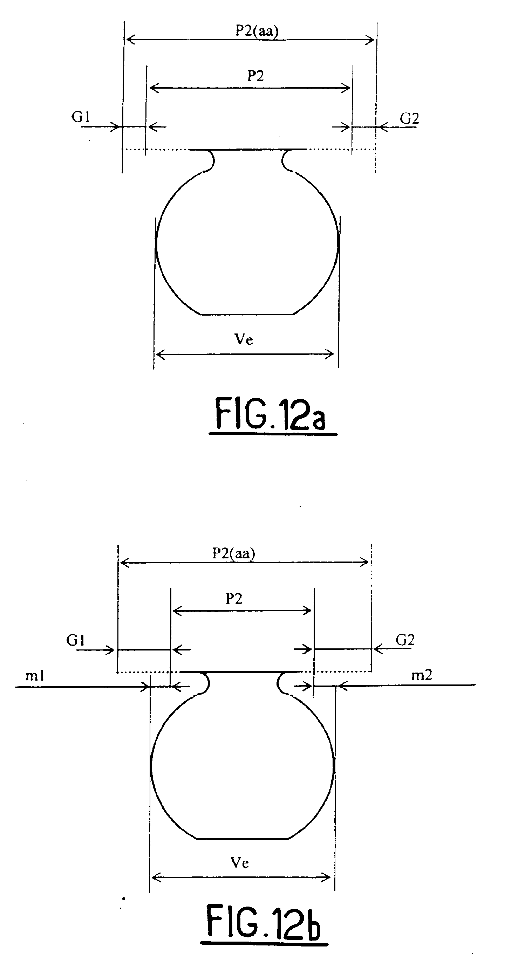

Dans certaines configurations de pots, il est possible de parler de « pertes négatives » réalisées par l'invention, au regard des pertes de matière subies par la mise en oeuvre des moyens de l'art antérieur. En effet, des bords de matière qui étaient irrémédiablement perdus du fait de ces configurations, sont récupérés pour former d'autres pots dans les tronçons suivants réalisés dans le cadre de la présente invention, le gain de matière ainsi réalisé sera illustré plus loin en référence à la figure 12.

Bien entendu, le même procédé peut être appliqué pour réaliser des pots avec ou sans décor.

La machine peut être avantageusement adaptée au traitement de plusieurs rangées de pots par cycle de fonctionnement.

On a vu que, dans le cas d'un traitement de la machine par rangée unique de pots par cycle, le pas machine P1 est égal à P2 + E, P2 étant le pas plastique ou, déjà appelé, pas matériau, et E l'espace entre deux tronçons de matériau. Plus généralement, dans le cas d'un traitement par n rangées de pots, le pas machine est égal à n(P2 + E).

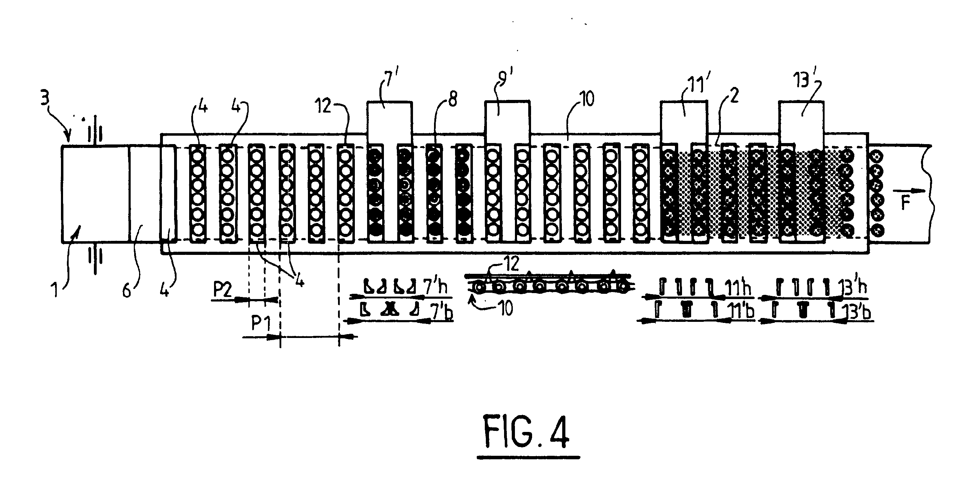

Dans l'exemple illustré par la figure 4 en vues supérieure (et partiellement latérale pour les moules 7 et les outils 11, 13), le pas machine P1 correspond à deux rangées R de pots 8, c'est-à-dire que P1 est alors égal à deux fois le pas matériau augmenté de l'espace E c'est-à-dire que P1 = (P2 +E)+(P2+E).

Les moules et outils de traitement 7', 9', 11' et 13', sont doublés à chaque poste. Le déplacement des tronçons entraînés est alors doublé et est, par exemple, de valeur à peine supérieure à l'ouverture maximale doublée 7'b des outillages d'encombrements 7'b, 9'b, 11'b et 13'b.

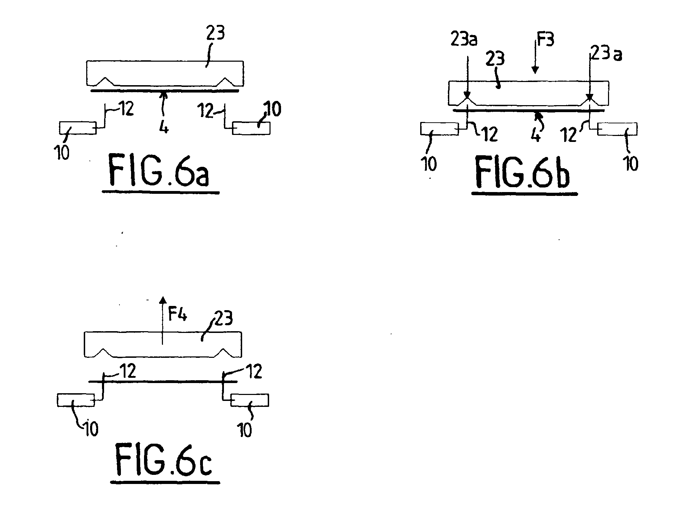

Le fonctionnement des moyens de coupe initiale de la feuille thermoformable 1 en tronçons 4 est illustré aux figures 5a à 5e, suivant cinq phases ainsi que, par une vue de face, en figures 6a à 6c, des moyens de picotage.

Les moyens de coupe 6 de la feuille de matériau 1 sont constitués par la guillotine 17, une cisaille ou une molette, associée à une enclume, une ou des contre-lames, ou une matrice support 19.

La phase de référence (figure 5a) représente la fin d'un cycle précédent. La guillotine 17 est constituée de la matrice19, support de la feuille 1, et des lames de coupe 18, 21 entraînées par des moyens de déplacement perpendiculairement à la feuille de thermoformage.

Des moyens de dépose des tronçons découpés, tels que des moyens presseurs 23, sont solidaires de la lame dans l'exemple illustré, mais peuvent aussi être indépendants dans d'autres exemples de réalisation. En variante, d'autres moyens de dépose et de positionnement, tels que des chariots à ventouses, des rampes ou des glissières, peuvent être prévus.

En phase de préparation (figure 5b), la feuille est avancée (flèche H) par les moyens d'entraînement en rotation 30 de la bobine 3. La guillotine possède également des lames de pré-coupe 21 de la feuille, qui agissent en amont de celle-ci. La fonction de ces lames de pré-découpe est de réaliser des découpes dans des zones de la feuille servant au picotage, afin d'éviter les interférences entre la lame principale et la chaîne à picots.

En phase de découpe (figure 5c) chaque tronçon 4 est découpé par déplacement vertical (flèche F1) de la lame principale 18 et des lames de pré-découpe 21 (flèche F2). Les lames de pré-découpe 21, commandées indépendamment de la lame 18 dans l'exemple (mais les lames peuvent être à commande unique dans d'autres exemples), sont prévues pour former deux découpes d'extrémité 22 dans la feuille au pas précédent le pas de coupe du tronçon 4. Ces pré-découpes agissent sur toute l'épaisseur de la feuille pour obtenir une découpe complète de la feuille au pas de coupe.

Le positionnement des tronçons 4 est réalisé par combinaison avec les moyens presseurs de dépose, dans cet exemple de réalisation. Des moyens de dépose peuvent également servir de moyens de positionnement, tels que des pinces ou des rampes mobiles.

La phase de picotage est plus précisément illustrée en figure 5d. La presse 23 entraîne (flèche F3, figure 5d) le tronçon 4 découpé contre la chaîne de transport 10, et troue le tronçon à travers les picots 12. Pour ne pas interférer avec les picots, la lame 18 et la presse 23 sont calibrées transversalement pour ne pas interférer avec les picot 12.

Les figures 6à à 6c montrent, en vue de face, la presse 23 et la chaîne 10 munie de ses picots 12, au cours de trois phases de fonctionnement. En figure 6a, le tronçon 4 se présente au regard des picots 12 de la chaîne 10. La presse 23 est ensuite actionnée pour pousser (flèches F3) le tronçon sur les picots 12 qui traversent le matériau plastique et viennent se loger dans des rainures de dégagement 23a de la presse 23 (figure 6b). Puis la presse 23 est actionnée pour remonter au niveau initial (flèche F4, figure 6c).

Alternativement, les moyens de presse sont séparés de la lame et la course des moyens de coupe est alors limitée aux nécessités de la coupe complète du tronçon. Les lames de pré-coupe peuvent alors être supprimées.

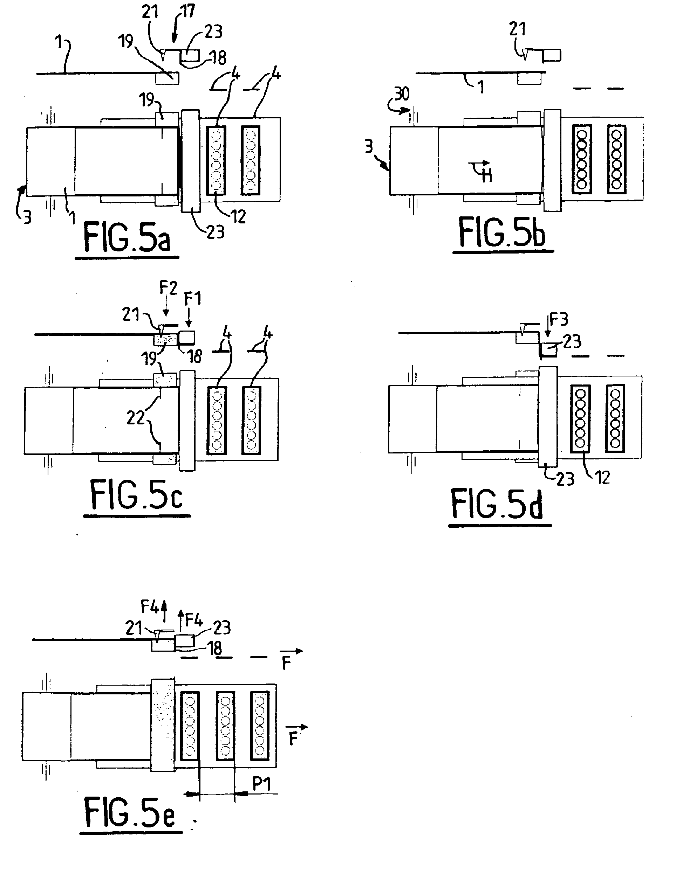

Pendant la phase de réinitialisation, illustrée en figure 5e, la guillotine 17 remonte (flèche F4), et la chaîne avance (flèche F) d'un pas P1 à peine supérieur à 100 mm (100 + ε).

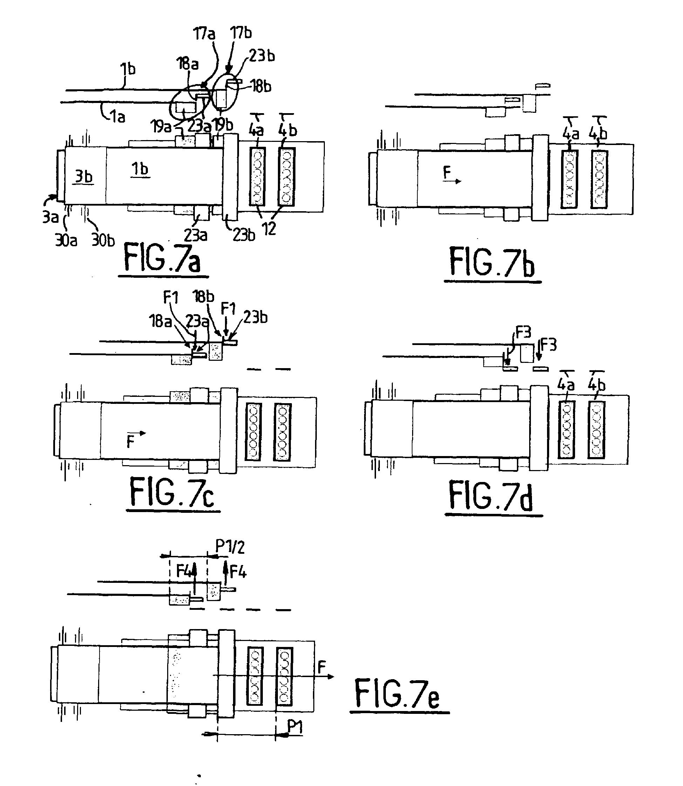

Les figures 7a à 7e montrent, de manière analogue aux figures 5a à 5e, les cinq phases de fonctionnement de moyens de coupe doublés pour deux feuilles thermoformables d'une machine adaptée au dépôt de deux tronçons par pas machine.

Dans cet exemple, il est prévu deux bobines d'alimentation 3a et 3b, entraînées par des moyens 30a, 30b pour alimenter deux feuilles de matériau thermoformable, respectivement 1a et 1b, deux outils de coupe et de dépose 17a et 17b, comprenant respectivement les matrices support 19a et 19b, les lames 18a et 18b, ainsi que les presses 23a et 23b. Des picots d'entraînement 12 des tronçons, respectivement 4a et 4b, sont également prévus. Les feuilles et les moyens de coupe sont superposés sans contact et décalés selon la direction de déplacement F d'un demi-pas machine P1/2 pour respecter le pas machine P1 (figure 7e) de l'exemple, très légèrement supérieur à 200 mm (200 + ε).

En variante, les figures 8a à 8f illustrent, en vues schématiques supérieures et latérales, six phases de fonctionnement des moyens de coupe de feuille thermoformable pour une machine adaptée à la coupe et au dépôt de deux tronçons par pas machine, mais à bobine d'alimentation unique.

La figure 8a montre un état de référence correspondant à la fin d'un cycle précédent, ayant permis la découpe de deux tronçons 4a et 4b avec un seul outil de coupe et de dépose, une guillotine 17 comprenant la lame 18, la presse 23 et la matrice 19.

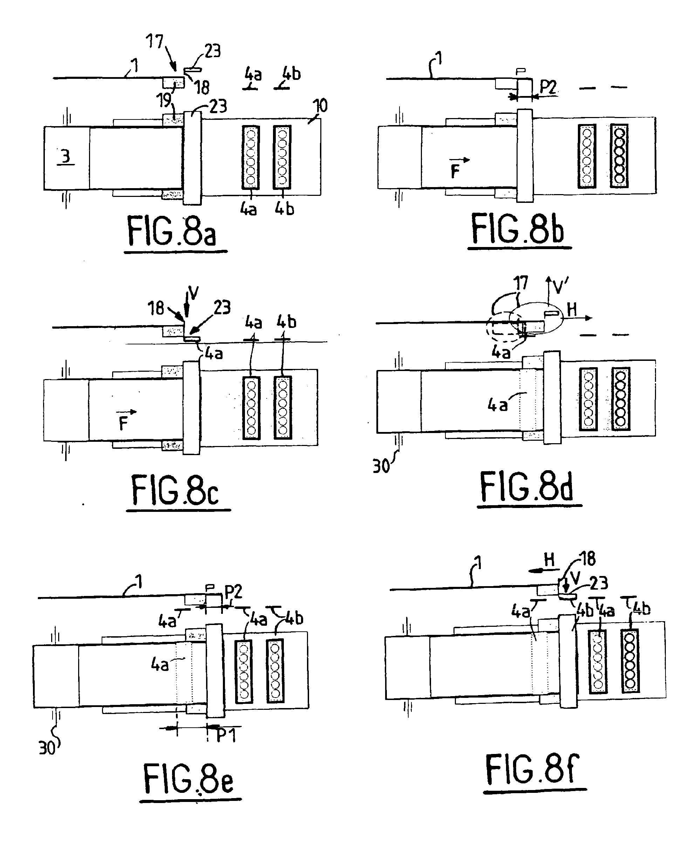

En phase de préparation de la première coupe, la feuille déformable est avancée selon la flèche F d'un pas plastique P2 de 60 mm (figure 8b). Puis, en phase de coupe (figure 8c), la lame 18 et la presse 23 sont déplacées verticalement en position basse (flèche V), la presse descendant au niveau des chaînes d'entraînement pour la dépose. Un tronçon 4a est ainsi tranché et déposé.

En phase suivante de préparation de la deuxième coupe (figure 8d), l'ensemble lame - presse est remonté en position haute (flèche V' opposée à la flèche V) et l'outil de coupe et de dépose 17 est avancé selon la flèche H d'un demi-pas machine P1/2 pour que la lame 18 devance le bord tranché du tronçon 4a d'un demi-pas machine P1 (figure 8e). Le tronçon 4a et la position antérieure de l'outil de coupe apparaissent alors en lignes pointillées.

La feuille est avancée, par commande des moyens d'entraînement 30 de la bobine 3, d'un pas plastique P2 augmenté d'un demi-pas machine P1/2 (ou P1 - E).

Le tronçon 4b est alors coupé (figure 8f) et déposé par abaissement respectif de la lame 18 et de la presse 2 (flèche V). Pendant l'avance de la chaîne, donc en temps masqué (0,5 s dans l'exemple), l'ensemble lame-presse est ensuite remontée, l'outil de coupe déplacé vers l'arrière (flèche H' opposée à la flèche H) d'un demi-pas P1/2 et la bobine plastique recule d'une distance égale à l'espace E, pour revenir à l'état de référence de la figure 8a.

Il est également possible, inversement, de faire reculer l'outil de coupe d'un demi-pas P1/2 après découpe du premier tronçon de chaque pas et recul de la bobine d'un espace E, pendant l'arrêt de la chaîne, puis d'avancer l'outil de coupe d'un demi-pas P1/2 et la bobine d'un pas plastique P2 augmenté d'un demi-pas machine P1/2, pendant l'avance de la chaîne (en temps masqué).

Dans une autre variante, l'outil de coupe est équipé de deux lames pour découper deux tronçons adjacents. Ces tronçons sont positionnés par des glissières ou des rampes inclinées qui transportent chaque tronçon de la position « haute » de coupe à la position « basse » de picotage par glissement. Par exemple, si l'espace E entre tronçons est de 40 mm, les moyens de glissement positionnent le premier tronçon de 20 mm dans le sens de l'avancée de la feuille plastique, alors que le deuxième tronçon glisse de 20 mm dans le sens opposé.

Dans une autre variante, l'outil de coupe des tronçons est équipé d'autant de lames que de tronçons à découper, c'est-à-dire que de rangées de pots par pas, et chaque tronçon est amené en position puis déposé sur le moyen d'avance (chaîne à picots, par exemple) par l'utilisation d'autant de plateaux de positionnement (plateaux à ventouse, par exemple).

Selon un aspect de l'invention, le matériau d'opercule peut être avantageusement, découpé également en tronçons, selon une géométrie identique ou semblable à celle utilisée dans la découpe en tronçons de la feuille de formage par des moyens de coupe équivalents. Une telle découpe permet également de supprimer les pertes du matériau d'opercule entre deux rangées de pots.

Les figures 9a à 9e illustrent, en vues schématiques supérieures et latérales, cinq phases de réalisation des opérations de découpe et de dépose du matériau d'opercule en tronçons 4'.

La figure 9a de référence montre une bobine 25 d'alimentation du matériau d'opercule 2 couplée à un outil de découpe 17, semblable aux outils de découpe précédents. La bobine 25 est disposée entre le poste de dosage des pots 8 formés à partir des tronçons 4, comportant le doseur volumétrique 9, et le poste de soudure, comportant une presse de soudure 11 composée d'une traverse supérieure 11s de support des électrodes 14 et d'une traverse inférieure 11i support de la contre-électrode.

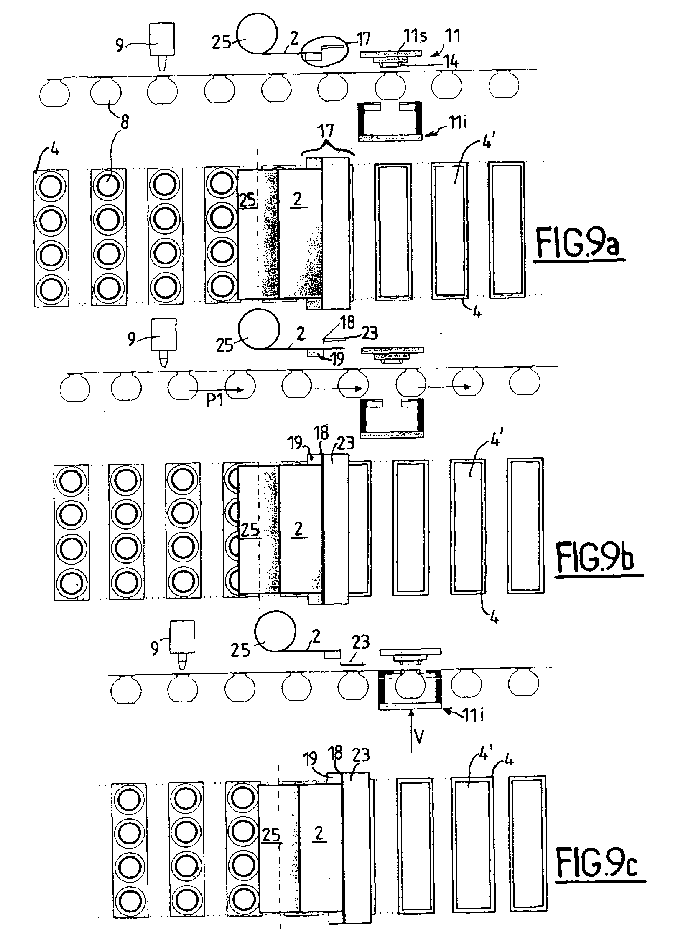

En phase de préparation (figure 9b), la feuille d'opercule avance sous la lame de coupe 18 de l'outil 17 d'un pas opercule P3, et les pots 8 sont avancés d'un pas machine P1.

Puis, en phase de coupe (figure 9c), la feuille d'opercule 2 est découpée en tronçon 4' par abaissement de la lame 18, le tronçon étant déposé sur le matériau de thermoformage 1 par abaissement de la presse 23 de l'outil de coupe 17. La traverse inférieure 11i est remontée (flèche V) dans la même phase afin de préparer la phase de scellage par soudure lors de la phase suivante.

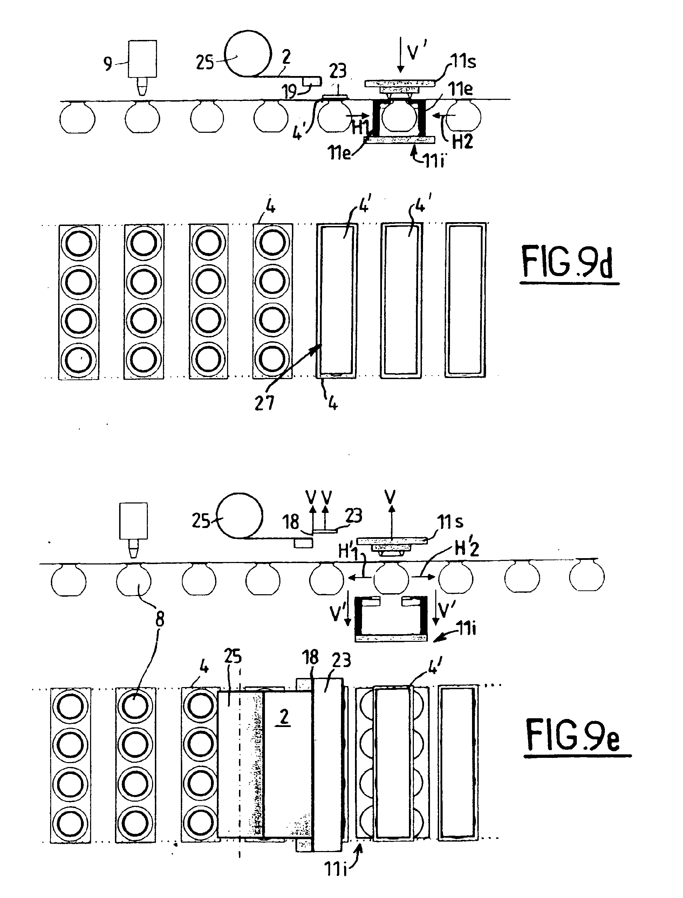

En référence à la figure 9d, la mise en position des tronçons d'opercule est réalisée par un pré-scellage par des moyens de soudure (non représentés) par points 27 des tronçons 4' de matériau d'opercule sur les tronçons de matériau plastique 4. Les points de soudure sont localisés dans les zones de déchets du matériau d'opercule non utilisé, classiquement appelées la grille, dans le cas d'une découpe en grille, ou les étoiles, dans le cas d'une découpe sans grille pour arrondir les angles des collerettes. Cette pré-soudure sert à entraîner les tronçons de matériau d'opercule correctement positionnés jusqu'au poste de soudure des pots.

Puis le scellage proprement dit est initié par fermeture de la presse de soudure par déplacement horizontal (flèches H1 et H2) des parois latérales 11l de la traverse inférieure 11i et d'un abaissement (flèche V') de la traverse supérieure 11s. Les électrodes préalablement portées à haute température (par exemple à 200°C), entraînent la fusion d'une laque contenue dans l'opercule, ou de matériaux auto-soudable, par exemple du polyéthylène sur polyéthylène.

La phase finale (figure 9e) consiste à remonter la lame de coupe 18 et la presse 23 (flèche V) de l'outil de coupe 17, et à ouvrir la presse de soudure 11 par déplacement de la traverse supérieure 11s (flèche V), des parois 11l (flèches H '1 et H'2) et de la traverse inférieure 11i ( flèche V'). Le poste de soudure est alors revenu en conformation de référence (figure 9a).

Dans d'autres exemples, le système de découpe du matériau d'opercule peut comporter autant de bobines que de rangées de pots à traiter, ou une seule bobine pour plusieurs rangées avec découpe successive (et positionnement) ou simultanée (avec amenée en position) comme pour le matériau déformable.

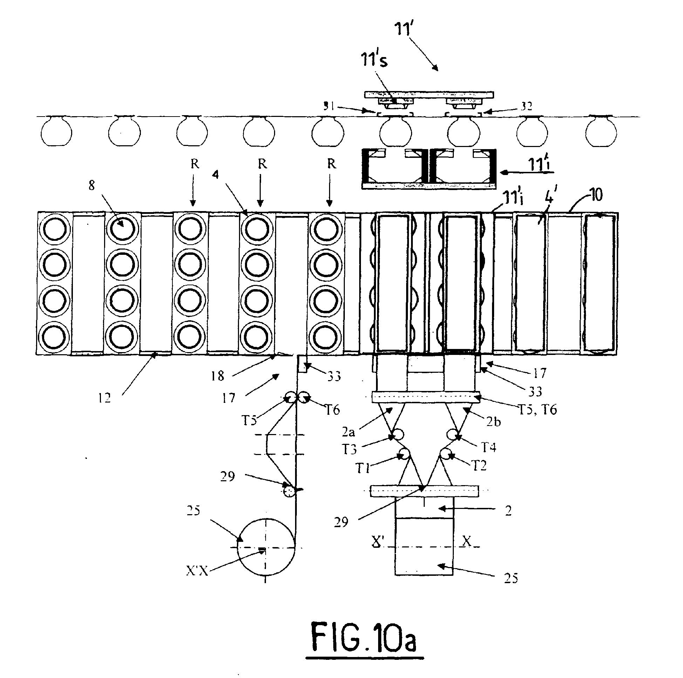

En variante, les opérations de découpe et de dépose de matériau d'opercule sont conduites latéralement conformément aux figures 10a à 10c dans le cadre d'un traitement des pots par rangées de deux. Cette variante convient particulièrement lorsque la machine permet de traiter simultanément plusieurs rangées de pots afin d'augmenter sa capacité.

En référence à la figure 10a, le poste de soudure du matériau d'opercule est composé d'une presse de soudure 11', composée d'une traverse supérieure 11's, et d'une traverse inférieure 11'i, formant un outillage double.

La bobine d'alimentation 25 de la feuille d'opercule 2 est disposée de sorte que son axe X'X soit parallèle à la direction de déplacement F de la chaîne de transport 10. La feuille est ainsi déroulée parallèlement aux rangées R de pots 8. Un système à lame 29 permet de fendre la feuille 2 longitudinalement. La multiplication de ce système à lame permet, plus généralement, de fendre la feuille d'opercule en autant de tronçons que de rangées de pots à traiter.

Les deux banderoles formées 2a et 2b sont disposés au-dessus des tronçons 4 de matériau déformable par des moyens d'avancée latérale et découpés par un outil de coupe 17 à lame 18 sur une contre-lame 33 pour former des tronçons d'opercule 4'. Des guides de séparation, formés par des rouleaux T1 à T4 dans l'exemple illustré, permettent d'écarter les banderoles après vrillage.

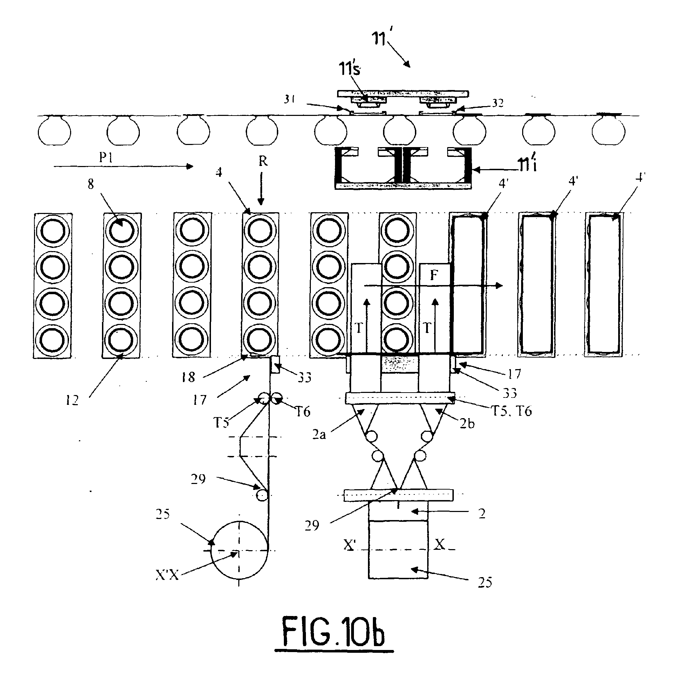

La figure 10b illustre la mise en place des banderoles de matériau d'opercule 2a et 2b. Au cours de l'avancée des rangées R de pots du pas machine P1 (flèches F), ou en début d'arrêt des pots, les moyens d'avancée latérale, sous la forme de rouleaux T5 et T6, poussent les banderoles transversalement (flèches T) par rapport à la direction d'avancée des pots pour les diriger vers les tronçons de formage. Des moyens de guidage formés par des glissières 31 et 32 positionnent les tronçons d'opercule 4' au regard des tronçons 4 de rangées de pots correspondants

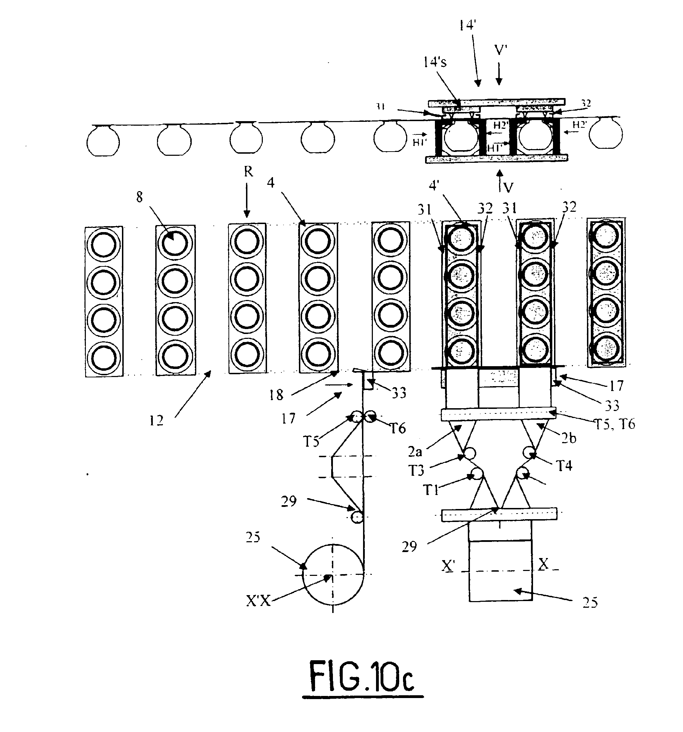

Puis les banderoles d'opercule sont coupées en tronçons 4' par l'outil de coupe 17 (figure 10c), la presse à soudure 11 est fermée pour procéder à la soudure des tronçons d'opercule (flèches H'1, H'2, V et V') et le dosage des produits est effectué au poste de dosage 9. Dans cet exemple non limitatif, les banderoles sont soudées directement sur les tronçons plastiques 4. A la fin de cette phase, un retour à la conformation illustrée par la figure 10a est effectué.

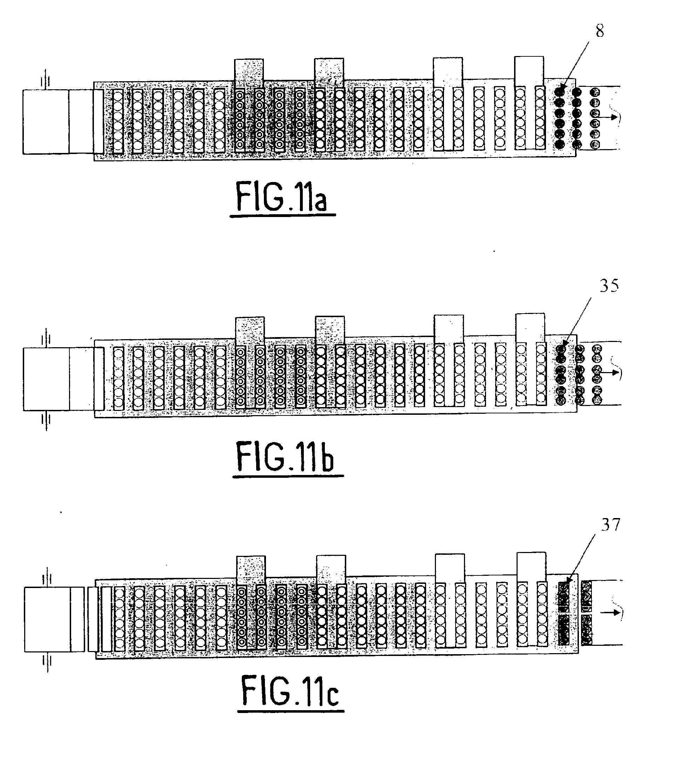

Par ailleurs, la découpe finale permet avantageusement d'obtenir, en particulier dans le cas d'un traitement par rangées multiples, des pots unitaires ou liés en packs, comme illustré aux figures 11a à 11c. La découpe est réalisée par des outils à lames positionnées pour former des pots uniques 8 (figure 11a) des packs 35 de 2 pots 8 (figure 11b) ou de packs 37 de 3 pots (figure 11c) conformément aux exemples illustrés.

Bien entendu, il n'est pas indispensable de n'avoir qu'une seule bobine d'opercule dans le cas de pas à multiples rangées : on peut aussi disposer sur un mandrin, ou sur plusieurs mandrins, autant de bobines que de rangées mais cela, outre l'inconvénient de multiplier les bobines, peut compliquer les dispositifs de synchronisme des dessins contenus sur la face visible des opercules, si ceux-ci doivent être centrés sur les pots.

Enfin, sur les figures 12a et 12b, on a schématiquement illustré le gain de matière obtenu avec le procédé de fabrication selon l'invention pour la fabrication d'un pot 8g, du type de celui illustré à la figure 2g par exemple. Selon l'art antérieur, il faut utiliser un tronçon de matériau de largeur égale au pas P2 (aa) (de l'art antérieur) qui est notamment plus large que le ventre Ve du pot 8g pour permettre l'ouverture des outillages. En comparaison, selon l'invention, il suffit d'un tronçon de matériau de largeur égale au pas P2 notablement inférieure à P2 (aa), ce qui correspond à un gain de matière G1 + G2 égal à l'espace E évoqué précédemment.

De plus, comme plus particulièrement illustré par la figure 12b, le pas P2 du tronçon de plastique peut être ajusté, dans certains cas, de manière à être sensiblement égal à la largeur de la collerette C, et donc sensiblement moins large que le ventre Ve du pot 8g : on peut alors parler de pertes négatives, m₁ + m₂, entre la largeur du tronçon de plastique et celle du ventre Ve, par rapport à la largeur du tronçon dans le cas de la figure 12a.

L'invention n'est pas limitée aux exemples de réalisation décrits et représentés. De nombreuses variantes et moyens de mise en oeuvre équivalents sont possibles sans sortir de l'invention, concernant par exemple les moyens de transport des tronçons : il est possible d'utiliser un système de pinces liées à une chaîne, à un cordon, à des barres ou équivalent.

Par ailleurs, dans le cas de pots réalisés à partir d'une feuille déformable à froid, par exemple une feuille d'aluminium, le système de thermoformage est remplacé par un système de déformation du métal par poinçonnage mécanique avec, en option, une pression de gaz ou de liquide.

## Revendications

1. Procédé de fabrication de pots non démoulables par formage intégré comportant des outillages de traitement successifs (7, 11, 13) d'au moins une feuille de matériau d'emballage (1, 2), ces outillages présentant une ouverture de conformation variable en fonctionnement (7h, 7b ; 11 h, 11b ; 13h, 13b), **caractérisé en ce qu'**il consiste à prévoir une coupe préliminaire (6) de la feuille d'emballage (1, 2) en tronçons selon une géométrie appropriée aux outillages de traitement, chaque tronçon du matériau étant coupé selon un pas matériau égal à très peu supérieur à la largeur de matériau nécessaire au traitement de formage ou d'operculage sans tenir compte de l'ouverture des outillages, puis à positionner successivement les tronçons (4, 4a, 4b,4') pour les faire avancer de manière espacée selon un pas machine (P1), le pas machine étant égal à très peu supérieur à la largeur d'outillage (7b, 11b, 13b) la plus importante en position ouverte de transfert.

2. Procédé de fabrication selon la revendication précédente, dans lequel le matériau de la feuille d'emballage est un matériau de formage (1).

3. Procédé de fabrication selon la revendication 1, dans lequel le matériau de la feuille d'emballage est un matériau d'operculage (2).

4. Procédé de fabrication selon la revendication 1, dans lequel les feuilles d'emballage sont en matériau de formage (1) et en matériau d'operculage (2) des pots (8), les tronçons des feuilles de formage et d'operculage sont découpés selon une géométrie semblable.

5. Machine de formage intégré pour la mise en oeuvre du procédé selon l'une quelconque des revendications précédentes, **caractérisée en qu'**elle comporte des moyens de coupe (6) en tronçons d'au moins une feuille de matériau de formage et/ou d'operculage (1,2) alimentée(s) à partir d'au moins une bobine (3, 3a, 3b), chaque tronçon ayant une largeur selon une direction de traitement égale à un pas matériau (P2), des moyens de dépose régulière (23,33) de chaque tronçon (4, 4a, 4b, 4') à une distance constante (E) définissant un espace entre les tronçons et des moyens de transport (10) de ces tronçons à différents postes de traitement, à raison d'autant de tronçons que de rangées (R) de pots (8) à fabriquer par pas machine (P1), ces postes comportant, successivement selon une direction de traitement (F), au moins des outillages de formage (7), de dosage (9), de soudure (11) et de découpe finale (13) des pots (8), ces outillages pouvant passer d'une conformation fermée (7h, 11 h, 13h) à ouverte (7b, 11b, 13b) en position de travail ou de transfert d'un poste à l'autre, le pas matériau (P2) étant réglé pour être égal à très peu supérieur à la largeur de matériau nécessaire au formage ou à l'operculage sans tenir compte de l'ouverture des outillages, et le pas machine (P1) entre deux tronçons étant égal à très peu supérieur à la largeur d'outillage la plus importante en conformation ouverte.

6. Machine de formage intégré selon la revendication précédente, dans laquelle les tronçons de matériau de formage et de matériau d'operculage sont découpés selon une géométrie semblable.

7. Machine selon l'une quelconque des revendications 5 et 6, dans laquelle chaque pas machine traite une à plusieurs rangées de pots à fabriquer à la fois, permettant la prise en charge continue d'une ou plusieurs rangées de pots par cycle sur chacun des postes de la machine.

8. Machine selon l'une quelconque des revendications 5 à 7, dans laquelle les moyens de coupe (6) sont constitués par une guillotine (17) composée d'une matrice (19) support de la feuille (1,2), associée à au moins une lame (18) entraînée par des moyens de déplacement permettant de couper la feuille de formage ou d'opercule.

9. Machine selon l'une quelconque des revendications 5 à 8, dans laquelle les moyens de transport du matériau de formage découpé en tronçons (4) sont constitués par une chaîne (10) à picots (12).

10. Machine selon la revendication précédente, dans laquelle les moyens de dépose des tronçons (4) est réalisé par des moyens presseurs (23) qui sont combinés aux moyens de coupe (6), les moyens de coupe ayant alors un gabarit limité par la présence des moyens de transport (12) pour ne pas interférer avec les moyens de transport à picots.

11. Machine selon la revendication 9, dans laquelle des moyens de pré-découpe (21) de la feuille de formage (1) sont prévus en combinaison avec les moyens de coupe (18, 23), pour former des pré-découpes d'extrémité (22) dans la feuille au pas précédent le pas de coupe, les moyens de pré-découpe agissant sur toute l'épaisseur de la feuille afin d'obtenir une découpe complète de la feuille au pas de coupe.

12. Machine selon la revendication 9, dans laquelle les moyens de dépose des tronçons (4) sont réalisés par des moyens presseurs (23) séparés des moyens de coupe, la course des moyens de coupe (17) étant alors limitée aux nécessités de la coupe.

13. Machine selon l'une quelconque des revendications 7 à 12, dans laquelle, lorsque le pas machine traite deux rangées (R) de pots (8), il est prévu une seule bobine d'alimentation (3) en feuille de formage et un seul moyen de coupe (17), le moyen de coupe avance d'un demi-pas machine (P1/2) après découpe du premier tronçon de chaque pas et la bobine (3) avance d'un pas plastique (P2) augmenté d'un demi-pas machine (P1/2) pendant l'arrêt de la chaîne, puis l'outil de coupe recule d'un demi-pas machine (P1/2) et la bobine recule de l'espace (E) entre tronçons, pendant l'avance de la chaîne, en temps masqué.

14. Machine selon l'une quelconque des revendications 7 à 12, dans laquelle, lorsque le pas machine traite deux rangées (R) de pots (8), il est prévu une seule bobine d'alimentation (3) en feuille de formage et un seul moyen de coupe (17), le moyen de coupe recule d'un demi-pas machine (P1/2) après découpe du premier tronçon de chaque pas et la bobine (3) recule d'un espace (E) entre tronçons, pendant l'arrêt de la chaîne, puis l'outil de coupe avance d'un demi-pas machine (P1/2) et la bobine avance d'un pas plastique (P2) augmenté d'un demi-pas machine (P1/2), pendant l'avance de la chaîne, en temps masqué.

15. Machine selon l'une quelconque des revendications 7 à 12, dans laquelle, lorsque le pas machine traite n rangées (R) de pots (8), il est prévu autant de moyens d'alimentation (3a, 3b) en feuilles de formage (1a, 1b) et de moyens de coupe de ces feuilles (6a, 6b) en tronçons (4a, 4b), ces moyens de coupe étant décalées de la valeur P1/n.

16. Machine selon l'une quelconque des revendications 5 à 8, dans laquelle des moyens de pré-soudure par points (27) des tronçons (4') de matériau d'opercule sont prévus sur les tronçons (4) de matériau de formage, pour entraîner les tronçons de matériau d'opercule jusqu'au poste de soudure (11) et réaliser l'operculage des pots (8).

17. Machine selon l'une quelconque des revendications 5 à 8, dans laquelle des moyens de découpe (29) fendent la feuille d'opercule en autant de banderoles (2a, 2b) que de rangées (R) de pots à traiter simultanément, puis des moyens de vrillage (T1 à T4) et d'avancée latérale (T5, T6) amènent les banderoles dans des glissières (31, 32) de positionnement pour que des moyens de découpe (17) tranchent les banderoles en tronçons (4') sur chaque tronçon (4) de feuille déformable (1).

18. Machine selon l'une quelconque des revendications 5 à 8, dans laquelle la bande de matériau d'opercule est stérilisée avant ou après tronçonnage.

19. Machine selon l'une quelconque des revendications 5 à 18, dans laquelle le formage est réalisé à chaud, à partir d'au moins une feuille de matériau de thermoformage.

20. Machine selon l'une quelconque des revendications 5 à 18, dans laquelle le formage est réalisé à froid par déformation d'une feuille de métal.

## Claims

1. Method of producing non-demouldable pots by integrated forming, comprising tools (7, 11, 13) for the successive treatment of at least one sheet of packaging material (1, 2), these tools having an opening which is variable in shape during operation (7h, 7b; 11h, 11b, 13h, 13b), **characterised in that** it comprises making a preliminary cut (6) of the packaging sheet (1, 2) into lengths in a geometry appropriate to the treatment tools, each length of the material being cut in accordance with a material step which is very slightly greater than the width of material needed for the forming or covering treatment without taking account of the opening of the tools, then successively positioning the lengths (4, 4a, 4b, 4') so as to advance them in a spaced manner according to a machine step (P1), the machine step being very slightly greater than the tool width (7b, 11b, 13b) which is greatest in the open transfer position.

2. Method of production according to the preceding claim, wherein the material of the packaging sheet is a forming material (1):

3. Method of production according to claim 1, wherein the material of the packaging sheet is a covering material (2).

4. Method of production according to claim 1, wherein the packaging sheets are made of forming material (1) and of material (2) for covering the pots (8), the lengths of the forming and covering sheets being cut according to a similar geometry.

5. Machine for integrated forming for carrying out the process according to any one of the preceding claims, **characterised in that** it comprises means (6) for cutting into lengths at least one sheet of forming and/or covering material (1, 2) supplied from at least one spool or roll (3, 3a, 3b), each length having a width in a direction of treatment equal to a material step (P2), means (23, 33) for regularly depositing each length (4, 4a, 4b, 4') at a constant distance (E) defining a space between the lengths and means (10) for transporting these lengths to different treatment stations, at the rate of as many lengths as there are rows (R) of pots (8) to be produced per machine step (P1), these stations comprising, successively in one direction of treatment (F), at least tools for forming (7), metering (9), welding (11) and finally cutting (13) the pots (8), these tools being capable of going from a closed configuration (7h, 11h, 13h) to an open configuration (7b, 11b, 13b) in the working position or in the position of transfer from one station to another, the material step (P2) being regulated so as to be very slightly greater than the width of material needed for the forming or covering without taking account of the opening of the tools, and the machine step (P1) between two lengths being very slightly greater than the tool width which is greatest in the open configuration.

6. Integrated forming machine according to the preceding claim, wherein the lengths of forming material and covering material are cut according to a similar geometry.

7. Machine according to any one of claims 5 and 6, wherein each machine step treats one or more rows of pots which are to be produced at a time, allowing the continuous loading of one or more rows of pots per cycle on to each station of the machine.

8. Machine according to any one of claims 5 to 7, wherein the cutting means (6) consist of a guillotine (17) made up of a matrix (19) which supports the sheet (1, 2), associated with at least one blade (18) driven by displacement means which allow the forming or covering sheet to be cut,

9. Machine according to any one of claims 5 to 8, wherein the means for transporting the forming material cut into lengths (4) consist of a chain (10) with spikes (12).

10. Machine according to the preceding claim, wherein the means for depositing the lengths (4) consist of pressing means (23) which are combined with the cutting means (6), the cutting means thus having a template which is limited by the presence of the transporting means (12) so as not to interfere with the spiked transporting means.

11. Machine according to claim 9, wherein means (21) for pre-cutting the forming sheet (1) are provided in conjunction with the cutting means (18, 23), to form end pre-cuts (22) in the sheet in the step preceding the cutting step, the pre-cutting means acting over the entire thickness of the sheet in order to obtain total cutting of the sheet in the cutting step.

12. Machine according to claim 9, wherein the means for depositing the lengths (4) consist of pressing means (23) separate from the cutting means, the travel of the cutting means (17) thus being limited to the requirements of the cut.

13. Machine according to any one of claims 7 to 12 wherein, when the machine step is processing two rows (R) of pots (8), there is a single roll (3) supplying the forming sheet and only one cutting means (17), the cutting means advances by half a machine step (P 1/2) after cutting the first length in each step and the roll (3) advances by a plastic step (P2) incremented by half a machine step (P1/2) during the stoppage of the chain, then the cutting tool goes back by half a machine step (P1/2) and the roll moves back from the space (E) between lengths, during the advance of the chain, in dead time.

14. Machine according to any one of claims 7 to 12, wherein, when the machine step is processing two rows (R) of pots (8), there is a single roll (3) supplying the forming sheet and only one cutting means (17), the cutting means goes back by half a machine step (P1/2) after cutting the first length in each step and the roll (3) moves back from a space (E) between lengths, during the stoppage of the chain, then the cutting tool advances by half a machine step (P1/2) and the roll advances by a plastic step (P2) incremented by half a machine step (P 1/2) during the advance of the chain, in dead time.

15. Machine according to any one of claims 7 to 12 wherein, when the machine step is treating n rows (R) of pots (8), as many supply means (3a, 3b) of forming sheets (1a, 1b) and cutting means for cutting these sheets (6a, 6b) into lengths (4a, 4b) are provided, these cutting means being offset by an amount P1/n.

16. Machine according to any one of claims 5 to 8, wherein means (27) for spot pre-welding the lengths (4') of the covering material are provided on the lengths (4) of forming material, to drive the lengths of covering material up to the welding station (11) and cover the pots (8).

17. Machine according to any one of claims 5 to 8, wherein cutting means (29) split the covering sheet into as many strips (2a, 2b) as there are rows (R) of pots to be treated simultaneously, then curling means (T1 to T4) and lateral advance means (T5, T6) feed the strips into positioning slideways (31, 32) so that cutting means (17) cut the strips into lengths (4') on each length (4) of deformable sheet (1).

18. Machine according to any one of claims 5 to 8, wherein the strip of covering material is sterilised before or after being cut into lengths.

19. Machine according to any one of claims 5 to 18, wherein the forming is carried out with heat, from at least one sheet of thermoformable material.

20. Machine according to any one of claims 5 to 18, wherein the forming is carried out cold by deformation of a sheet of metal.

## Patentansprüche

1. Herstellungsverfahren für nicht entformbare Gefäße durch integrierte Formgebung mit aufeinanderfolgenden Bearbeitungswerkzeugen (7, 11, 13) für mindestens eine Verpackungsmaterialfolie (1, 2), wobei diese Werkzeuge eine Öffnung mit im Betriebsablauf variabler Konstellation (7h, 7b; 11 h, 11 b; 13h, 13b) aufweisen, **dadurch gekennzeichnet, dass** das Verfahren darin besteht, einen vorläufigen Zuschnitt (6) der Verpackungsfolie (1, 2) in Teilstücke gemäß einer für die Verarbeitungswerkzeuge geeigneten Geometrie vorzusehen, wobei jedes Teilstück gemäß einer Materialteilung zugeschnitten wird, die gleich bis sehr wenig größer als die Materialbreite ist, die für die Formgebungs- oder Verschlussdeckelbearbeitung notwendig ist, ohne die Öffnung der Werkzeuge zu berücksichtigen, dann die Teilstücke (4, 4a, 4b, 4') sukzessive anzuordnen, um sie gemäß einer Maschinenteilung (P1) beabstandet vorrücken zu lassen, wobei die Maschinenteilung in der offenen Übertragungsposition gleich bis sehr wenig größer als die größte Werkzeugbreite (7b, 11b, 13b) ist.

2. Herstellungsverfahren nach dem vorhergehenden Anspruch, wobei das Material der Verpackungsfolie ein Formgebungsmaterial (1) ist.

3. Herstellungsverfahren nach Anspruch 1, wobei das Material der Verpackungsfolie ein Verschlussdeckelmaterial (2) ist.

4. Herstellungsverfahren nach Anspruch 1, wobei die Verpackungsfolien aus einem Formgebungsmaterial (1) und einem Verschlussdeckelmaterial (2) für die Gefäße (8) sind, wobei die Teilstücke der Formgebungs- und Verschlussdeckelfolien gemäß einer gleichen Geometrie zugeschnitten werden.

5. Integrierte Formmaschine zur Umsetzung des Verfahrens nach einem der vorhergehenden Ansprüche, **dadurch gekennzeichnet, dass** sie Einrichtungen zum Zuschneiden (6) in Teilstücke mindestens einer Formgebungs- und/oder Verschlussdeckelmaterialfolie (1, 2), die ausgehend von mindestens einer Rolle (3, 3a, 3b) zugeführt wird, wobei jedes Teilstück eine Breite entlang einer Bearbeitungsrichtung hat, die gleich einer Materialteilung (P2) ist, Einrichtungen zum regelmäßigen Ablegen (23, 33) jedes Teilstücks (4, 4a, 4b, 4') in einem konstanten Abstand (E), der einen Raum zwischen den Teilstücken bildet, und Einrichtungen zum Transport (10) dieser Teilstücke zu verschiedenen Bearbeitungsstationen im Verhältnis ebenso vieler Teilstücke wie Reihen (R) von pro Maschinenteilung (P1) herzustellender Gefäße (8) umfasst, wobei diese Stationen aufeinanderfolgend entlang einer Bearbeitungsrichtung (F) mindestens Formgebungswerkzeuge (7), Zuteilungswerkzeuge (9), Schweißwerkzeuge (11) und Endzuschnittwerkzeuge (13) für die Gefäße (8) umfassen, wobei diese Werkzeuge von einer geschlossenen (7h, 11h, 13h) zu einer offenen (7b, 11b, 13b) Konstellation in der Arbeitsstellung oder Übertragungsstellung von einer Station zur nächsten übergehen können, wobei die Materialteilung (P2) geregelt wird, um gleich bis sehr wenig größer als die Materialbreite zu sein, die zur Formgebung oder zum Verschlussdeckel notwendig ist, ohne die Öffnung der Werkzeuge zu berücksichtigen, und wobei die Maschinenteilung (P1) zwischen zwei Teilstücken gleich bis sehr wenig größer als die größte Werkzeugbreite in der offenen Konstellation ist.

6. Integrierte Formmaschine nach dem vorhergehenden Anspruch, wobei die Teilstücke des Formgebungsmaterials und des Verschlussdeckelmaterials gemäß einer gleichen Geometrie zugeschnitten werden.

7. Maschine nach einem der Ansprüche 5 und 6, wobei jede Maschinenteilung eine bis mehrere Reihe/n gleichzeitig herzustellender Gefäße bearbeitet, wodurch die kontinuierliche Übernahme einer oder mehrerer Reihe/n von Gefäßen pro Arbeitstakt in jeder der Stationen der Maschine möglich ist.

8. Maschine nach einem der Ansprüche 5 bis 7, wobei die Zuschnitteinrichtungen (6) aus einem Querschneider (17) bestehen, der sich aus einem Untergesenk (19) für die Folie (1, 2) zusammensetzt, das mindestens einem von Verschiebungseinrichtungen angetriebenen Schneidmesser (18) zugeordnet ist, wodurch der Zuschnitt der Formgebungs- oder Verschlussdeckelfolie möglich wird.

9. Maschine nach einem der Ansprüche 5 bis 8, wobei die Transporteinrichtungen für das in Teilstücke (4) zugeschnittene Formgebungsmaterial aus einem Band (10) mit Stacheln (12) besteht.

10. Maschine nach dem vorhergehenden Anspruch, wobei die Einrichtungen zum Ablegen der Teilstücke (4) aus Presseinrichtungen (23) bestehen, die mit den Zuschnitteinrichtungen (6) kombiniert sind, wobei die Zuschnitteinrichtungen dann durch das Vorhandensein der Transporteinrichtungen (12) ein eingeschränktes Raumprofil haben, um den Transporteinrichtungen mit Stacheln nicht im Wege zu stehen.

11. Maschine nach Anspruch 9, wobei Vorzuschnitteinrichtungen (21) für die Formgebungsfolie (1) in Kombination mit den Zuschnitteinrichtungen (18, 23) vorgesehen sind, um endgültige Vorzuschnitte (22) in der Folie bei dem Schritt herzustellen, der dem Zuschnittschritt vorausgeht, wobei die Vorzuschnitteinrichtungen auf die gesamte Dicke der Folie wirken, um ein vollständiges Zerschneiden der Folie beim Zuschnittschritt zu erzielen.

12. Maschine nach Anspruch 9, wobei die Einrichtungen zum Ablegen der Teilstücke (4) aus Presseinrichtungen (23) bestehen, die von den Zuschnitteinrichtungen getrennt sind, wobei der Hub der Zuschnitteinrichtungen (17) dann auf die Notwendigkeiten des Zuschnitts beschränkt ist.

13. Maschine nach einem der Ansprüche 7 bis 12, wobei, wenn die Maschine zwei Reihen (R) von Gefäßen (8) bearbeitet, eine einzige Zufuhrrolle (3) für die Formgebungsfolie und eine einzige Zuschnitteinrichtung (17) vorgesehen ist, wobei die Zuschnitteinrichtung nach dem Abschneiden jedes Teilstücks jeder Teilung um eine halbe Maschinenteilung (P1/2) vorrückt, und die Rolle (3) um eine plastische Teilung (P2) erhöht um eine halbe Maschinenteilung (P1/2) während des Stillstands des Bands vorrückt, dann das Schneidwerkzeug um eine halbe Maschinenteilung (P1/2) zurückweicht und die Rolle um einen Zwischenraum (E) zwischen Teilstücken während des Vorrückens des Bands zeitüberdeckt zurückweicht.

14. Maschine nach einem der Ansprüche 7 bis 12, wobei, wenn die Maschine zwei Reihen (R) von Gefäßen (8) bearbeitet, eine einzige Zufuhrrolle (3) für die Formgebungsfolie und eine einzige Zuschnitteinrichtung (17) vorgesehen ist, wobei die Zuschnitteinrichtung nach dem Abschneiden des ersten Teilstücks jeder Teilung um eine halbe Maschinenteilung (P1/2) zurückweicht und die Rolle (3) um einen Zwischenraum (E) zwischen Teilstücken während des Stillstands des Bands zurückweicht, dann das Schneidwerkzeug um eine halbe Maschinenteilung (P1/2) vorrückt und die Rolle um eine plastische Teilung (P2) erhöht um eine halbe Maschinenteilung (P1/2) während des Vorrückens des Bands zeitüberdeckt vorrückt.

15. Maschine nach einem der Ansprüche 7 bis 12, wobei, wenn die Maschine n Reihen (R) von Gefäßen (8) bearbeitet, ebenso viele Zufuhreinrichtungen (3a, 3b) für Formgebungsfolien (1a, 1b) und Einrichtungen zum Zerschneiden dieser Folien (6a, 6b) in Teilstücke (4a, 4b) vorgesehen sind, wobei diese Schneideinrichtungen um den Betrag P1/n versetzt sind.

16. Maschine nach einem der Ansprüche 5 bis 8, wobei Punktvorschweißeinrichtungen (27) für die Teilstücke (4') des Verschlussdeckelmaterials an den Teilstücken (4) des Formgebungsmaterials vorgesehen sind, um die Teilstücke des Verschlussdeckelmaterials bis zur Schweißstation (11) mitzunehmen und den Deckelverschluss der Gefäße (8) herzustellen.

17. Maschine nach einem der Ansprüche 5 bis 8, wobei die Zuschneideeinrichtungen (29) die Verschlussdeckelfolie in ebenso viele Banderolen (2a, 2b) wie Reihen (R) von gleichzeitig zu bearbeitenden Gefäßen vorhanden sind, zerteilen, dann Aufrolleinrichtungen (T1 bis T4) und Seitenvorschubeinrichtungen (T5, T6) die Banderolen in Positionierungsführungen (31, 32) einführen, damit die Zuschnitteinrichtungen (17) die Banderolen an jedem Teilstück (4) aus nachgiebiger Folie (1) in Teilstücke (4') zerschneiden.

18. Maschine nach einem der Ansprüche 5 bis 8, wobei das Verschlussdeckelmaterial vor oder nach dem Zerteilen sterilisiert wird.

19. Maschine nach einem der Ansprüche 5 bis 18, wobei die Formgebung unter Wärme ausgehend von mindestens einer Warmformmaterialfolie erfolgt.

20. Maschine nach einem der Ansprüche 5 bis 18, wobei die Formgebung unter Kälte durch Verformung einer Metallfolie erfolgt.
